## Europäisches Patentamt
## European Patent Office
## Office européen des brevets

(19)

(11) Veröffentlichungsnummer: **0 001 834**
**B1**

(12)

# EUROPÄISCHE PATENTSCHRIFT

(45) Veröffentlichungstag der Patentschrift: **01.04.81**

(21) Anmeldenummer: **78101285.1**

(22) Anmeldetag: **02.11.78**

(51) Int. Cl.³: **C 01 B 21/40**

(54) **Verfahren zum Absorbieren nitroser Gase.**

(30) Priorität: **05.11.77 DE 2749550**

(43) Veröffentlichungstag der Anmeldung:
**16.05.79 Patentblatt 79/10**

(45) Bekanntmachung des Hinweises auf die Patenterteilung:
**01.04.81 Patentblatt 81/13**

(84) Benannte Vertragsstaaten:
**BE CH DE FR GB NL SE**

(56) Entgegenhaltungen:
**AT - B - 270 684**
**DE - A - 1 932 945**
**DE - A - 2 443 568**

(73) Patentinhaber: **HOECHST AKTIENGESELLSCHAFT**
**Zentrale Patentabteilung Postfach 80 03 20**
**D-6230 Frankfurt/Main 80 (DE)**

(72) Erfinder: **Steiner, Rudolf, Prof. Dr.**
**Unterm Waldweg 17**
**D-6232 Bad Soden am Taunus (DE)**
Erfinder: **Herbrechtsmeier, Peter, Dr.**
**Berliner Strasse 10**
**D-6238 Hofheim am Taunus (DE)**

Courier Press, Leamington Spa, England.

Verfahren zum Absorbieren nitroser Gase

Es ist bekannt, Salpetersäure durch Absorption nitroser Gase herzustellen. Die Gasflüssigreaktion mit Wasser als Absorptionsmittel wird in Boden- oder Füllkörperkolonnen durchgeführt. So ist aus der DE-A-1 932 945 ein Verfahren zum Herstellen von Salpetersäure bekannt, bei dem man die direkt aus der katalytischen Ammoniakverbrennung kommenden nitrosen Gase mit Salpetersäure in einer Bodenkolonne zusammenführt. Aus der AT-B- 270 684 ist ein Verfahren zur Herstellung konzentrierter Salpetersäure bekannt, bei dem man Salpetersäure mit einer scheinbaren Dichte von etwa 1,45 in einer Füllkörperkolonne in einem abwärts gerichteten Parallelstrom mit Luft bzw. mit durch Sauerstoff angereicherter Luft behandelt. Dabei vollzieht sich in situ eine Oxidation der gelösten Stickoxide unter Bildung von $NO_2$ und $NO_3$. Dieser Prozess erfordert schlanke Reaktoren großer Bauhöhe. Zum Erzielen einer hohen Absorptionsausbeute wird in neueren Anlagen bei Drucken zwischen 3 und 9 bar gearbeitet.

Nach der DE-A- 29 43 568 ist ein Verfahren und Vorrichtung zum Herausführen von Gasblasen in Flüssigkeiten bekannt, bei dem in einer in einer freien Flüssigkeit befindlichen kommunizierenden Röhre mittels eines Flüssigkeitsstrahls gebildete Gasblasen durch eine nach unten gerichtete, durch den Flüssigkeitsstrahl ezeugte Flüssigkeitsströmung mitgerissen werden.

Der Erfindung liegt die Aufgabe zugrunde, ein Verfahren zum Absorbieren von nitrosen Gasen in wäßriger Phase zu schaffen, das hohe Absorptionsausbeuten bei geringer Bauhöhe des Reaktors gestattet.

Die Aufgabe wird durch eine Verfahren gelöst, das dadurch gekennzeichnet ist, daß man die nitrosen Gase mit sauerstoffhaltigem Gas mischt, am Kopf eines Kolonnenreaktors in eine wäßrige Phase dispergiert und im Gleichstrom mit der wäßrigen Phase entgegen der Richtung der Auftriebskraft der Gase durch den Kolonnenreaktor führt.

Die Verweilzeit der Gase im Kolonnenreaktor kann durch entsprechende Dosierung der wäßrigen Phase in weiten Grenzen bis hin zu einem Schwebezustand bei gleichen Auftriebs- und Abtriebskräften variiert werden. Hierfür kann es zweckmäßig sein, die wässrige Phase in einer Schlaufe zu führen.

Nitrose Gase ($NO_x$) bedeuten in diesem Zusammenhang NO, $NO_2$ und Mischungen aus NO und $NO_2$. Wässrige Phase soll Wasser und/oder Salpetersäure und sauerstoffhaltiges Gas, Sauerstoff, Ozon, Luft etc. bedeuten. Nach dem erfindungsgemäßen Verfahren kann mit einem Reaktor von 3 m Bauhöhe bereits eine $NO_x$ Restkonzentration von <500 ppm erzielt werden.

Die Erfindung wird im folgenden an zwei Beispielen näher beschrieben.

### Beispiel 1

Der Kolonnenreaktor, der als ein Blasensäulen-Abstromreaktor bezeichnet werden kann, bestand aus einem Reaktionsrohr 1, das in einen Behälter 2, der als Gas-Flüssigkeits-Separator diente, abgetaucht war. Die Nennweite des Reaktionsrohres 1 betrug 150 mm, die Höhe 2000 mm. Die Nennweite des Behälters 2 betrug 450 mm. Der Reaktor ist ferner mit einem Einlaß 3 und einem Auslaß 4 für das Wasser, radial angeordneten Einlaß- und Verteilerorganen 7 und einem Auslaß 6 für das Gas versehen. Eine Pumpe 8 förderte die entgaste Flüssigkeit über Leitung 11 zum Kolonnenkopf zurück. Das Ventil 9 wurde druckabhängig mittels PC-Regler 10 gesteuert. Frisches Wasser wurde über Leitung 13 und Ventil 14 zugeführt. Wasser mit höherer $HNO_3$ Konzentration über Ventil 5 und Leitung 12 dem Reaktor entnommen. Dem Kolonnenreaktor wurden am Kopf des Reaktionsrohres (1) 14 Normalkubikmeter pro Stunde Wasser zugeführt, in das über die vier radial angeorneten Fritten (7) 280 Normalliter pro Stunde Gesamtgas dispergiert wurden. Das Gesamtgas setzte sich aus 250 Normalliter pro Stunde Luft und 30 Normalliter pro Stunde NO zusammen, was einer Eingangskonzentration von 10,7 Volumenprozent entspricht. Das NO konnte mit dem verwendeten Reaktor bis auf eine $NO_x$ Restkonzentration von 1500 ppm (Träger-Röhrchenmeßgenauigkeit) im Gasraum des Behälters 2 absorbiert werden. Der Absorptionsgrad betrug somit über 98%. Der Absolutdruck im Gasraum des Behälters 2 betrug 1,2 bar. Die Flüssigkeitstemperatur betrug 27°C. Die Bestimmung des Säuregehalts der wässrigen Phase zeigt, daß das eingegebene NO in dem Reaktor vollständig zur Säure umgesetzt wurde. Bei diesem Versuch wurden die Gasblasen nahe einem Schwebezustand mit hoher mittlerer Verweilzeit von ca. 90 sec., die aus der Wanderungsgeschwindigkeit einer Blasenfront bestimmt wurde, im Reaktor abwärts geführt. Der Reaktor wirkt dabei sowohl als Oxidations- als auch als Absorptionsreaktor.

### Beispiel 2

In einem Reaktor wie in Beispiel 1 beschrieben, wurde unter sonst gleichen Versuchsbedingungen wie in Beispiel 1 statt Wasser 50 Gew.-%ige Salpetersäure am Kopf des Kolonnenreaktors aufgegeben. Der Versuch zeigte, daß auch bei Verwendung von hochprozentiger Salpetersäure keine Verschlechterung des Absorptionsgrades eingetreten ist.

Durch Erhöhung des Druckes sowie Absenken der Temperatur läßt sich der Absorptionsgrad noch weiter erhöhen.

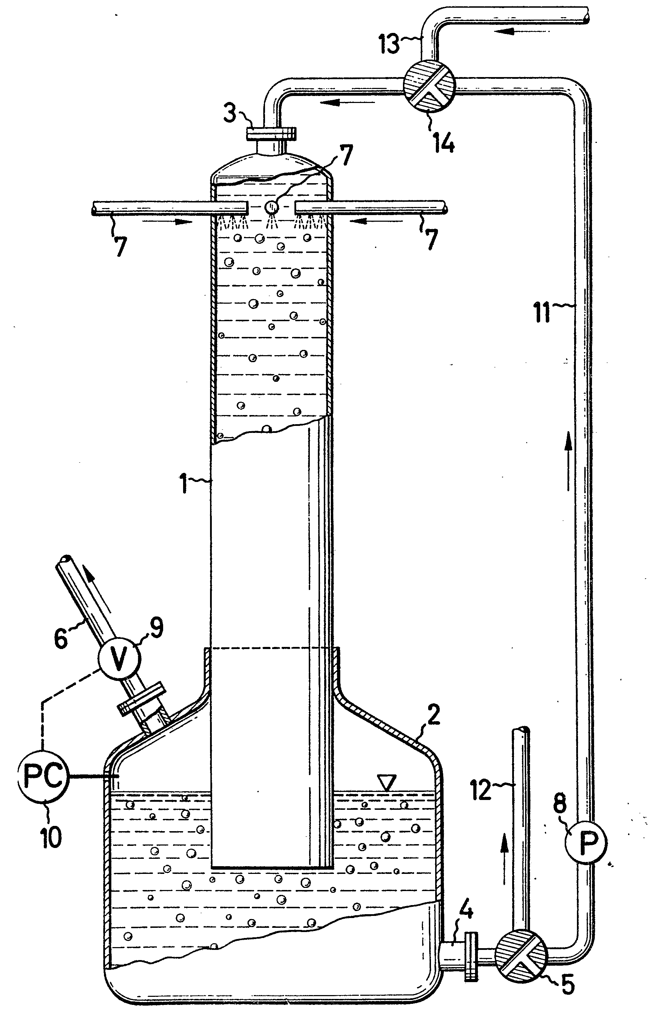

### Patentansprüche

1. Verfahren zum Absorbieren von nitrosen Gasen wie NO und/oder NO$_2$ in Gegenwart von Sauerstoff in wäßriger Phase wie Wasser und/oder Salpetersäure, dadurch gekennzeichnet, daß man die nitrosen Gase mit sauerstoffhaltigem Gas mischt, am Kopf eines Kolonnenreaktors in die wäßrige Phase dispergiert und im Gleichstrom mit der wäßrigen Phase entgegen der Richtung der Auftriebskräfte der Gase durch den Kolonnenreaktor führt.

2. Verfahren nach Anspruch 1, dadurch gekennzeichnet, daß die wäßrige Phase in einer Schlaufe geführt wird.

### Revendications

1. Procédé pour absorber des vapeurs nitreuses, telles que NO et/ou NO$_2$, en présence d'oxygène, dans une phase aqueuse, telle que l'eau et/ou de l'acide nitrique, procédé caractérisé en ce qu'on mélange les vapeurs nitreuses avec un gaz contenant de l'oxygène, on disperse le mélange gazeux dans la phase aqueuse à la tête d'une réacteur en colonne et on leur fait traverser le réacteur en collone dans le même sens que la phase aqueuse et dans le sens opposé aux forces ascensionnelles des gaz.

2. Procédé selon la revendication 1, caractérisé en ce qu'on fait circuler la phase aqueuse dans une boucle.

### Claims

1. A process for absorbing nitrous gases such as NO and/or NO$_2$ in the presence of oxygen in aqueous phase such as water and/or nitric acid, which comprises mixing the nitrous gases with oxygen-containing gas, dispersing this mixture into the aqueous phase at the head of the column reactor, and passing it through the column reactor in parallel current with the aqueous phase towards to the buoyancy of the gases.

2. The process of claim 1, which comprises passing the aqueous phase in a loop.